# EUROPEAN PATENT SPECIFICATION

(11) **EP 2 735 759 B1**
(45) Date of publication and mention of the grant of the patent: **11.04.2018**
(21) Application number: 11769893.6
(22) Date of filing: 22.07.2011
(51) Int. Cl.: F16F 9/48, F16F 9/02

(54) **DELAYED RETURN GAS SPRING**
GAS FEDER MIT VERZÖGERTER RÜCKKEHR
RESSORT À GAZ À RETOUR RALENTI

(43) Date of publication of application: 28.05.2014
(73) Proprietor: Azol-gas, S. L., 01015 Vitoria (Álava) (ES)
(72) Inventor: ESTIRADO, Félix, E-01015 Vitoria (Álava) (ES); ALEJOS, Oscar, E-01015 Vitoria (Álava) (ES)
(74) Representative: Pons
(86) International application number: PCT/ES2011/070545
(87) International publication number: WO 2013/014300

(56) References cited:
- EP-A2- 1 186 795
- DE-A1- 2 722 884
- DE-U1- 29 521 002
- US-A- 3 348 835
- US-A1- 2005 235 823
- US-A1- 2006 185 947

## Description

### OBJECT OF THE INVENTION

The object of the invention is a gas spring that has a delayed rod return so that it avoids vibrations due to the rapid opening of the press.

### BACKGROUND OF THE INVENTION

Gas springs are stress regulating devices commonly used in the field of sheet metal stamping.

Gas springs comprise a hollow cylindrical body with an open end and a rod of a lower section than the hollow cylindrical body located within the same and longitudinally slidable in it through its open end. Additionally, they may also comprise a plunger connected to the rod which extends between the rod and the inner side of the hollow cylindrical body so that when the rod slides, the existence of a first gas chamber located between the open end of the hollow cylindrical body and the plunger and a second gas chamber located between the plunger and the base of the hollow cylindrical body is determined. The plunger has an outer seal that seals the gas passage between this and the inner wall of the cylindrical body. Such gas springs are disclosed in documents DE 2722884, DE29521002U1 and EP 1186795A2.

Gas springs have control of their movement by controlling the flow of gas passing from one chamber to another. This control allows for a delayed sliding of the rod when it is in the retraction phase. This type of delay return gas spring is used to prevent vibration due to a rapid opening of the press, which when the upstroke of the gas spring and the rod is completed, it loses contact with the press and produces an impact between the plunger and the open end cap of the cylindrical body which affects the gas spring itself and the die.

The operation of a delay gas spring based on the said communication between the first and the second gas chamber is known. In this case, the plunger comprises one or more first holes that connect both chambers and have a check valve which is configured so that the gas can pass from the second chamber to the first chamber but not in the opposite direction. The plunger also comprises a second hole that has a reduced section compared to the first ones and which allows the passage of gas in both directions.

When the press pushes the gas spring rod, the gas that is in the second chamber tries to pass to the first chamber due to the pressure difference generated. The check valves are opened and allow the gas to pass. The flow of gas passing through the hole of smaller diameter is minimal.

Once the stroke has been completed, the press begins its upstroke and therefore, so does the gas spring rod. At that moment, the check valves are closed and the gas flow from the first chamber to the second chamber is limited to passing through the hole of smaller diameter only. From this moment, while the press continues its upward movement, the first chamber begins to increase its pressure and the second chamber begins to reduce it until the forces are equal. Subsequently, the movement of the gas spring rod will depend on the flow of gas that can pass through the hole of smaller diameter.

The described gas spring allows the press to descend to a normal speed, as the opening of the check valves allows for sufficient gas flow to pass, and does not penalize the normal work of the press either for stress or cadence. However, in the return stroke of the rod, the calibrating of the hole of smaller diameter can cause the gas spring to return slower than the press. This operation has the disadvantage of generating considerable heat, which limits the work frequency of the gas spring, or working at the same frequency, it decreases the lifetime of the gas spring.

Other solutions to achieve a controlled return of the rod, which consist of adding a cylindrical brake to the top of the inner face of the hollow cylindrical body and the rod so that a third airlock chamber is created between the top of the hollow cylindrical body and the contact area between both brakes which slows down the upward movement of the rod, are known in the prior art. However, this solution also has the disadvantage of the pressure in the third chamber or airlock being high which causes problems of fatigue or extrusion in the sealing elements, limiting the lifetime of the gas spring.

### DESCRIPTION OF THE INVENTION

The delay return gas spring object of the invention is of the type comprising:
- a hollow cylindrical body with an open end,
- a rod located in the hollow cylindrical body of a lesser section than this and which is longitudinally slidable through its open end,
- a plunger attached to the rod,
- a first gas chamber located between the open end of the hollow cylindrical body and the plunger,
- a second gas chamber located between the plunger and the base of the hollow cylindrical body, and
- gas passage means between the two chambers located in the plunger, configured so that they allow the passage of a first flow from the second chamber to the first chamber and the passage of a second flow from the first chamber to the second chamber lower than the first flow in order to delay the return of the rod.

The invention further foresees that; the hollow cylindrical body comprises a first longitudinal area located in the vicinity of its open end having a first inner diameter and a second longitudinal area placed following the first longitudinal area having a second inner diameter wherein the second inner diameter is greater than the first inner diameter, so that a radial space is comprised between the hollow cylindrical body and the plunger in the second longitudinal area for the passage of gas between both chambers; the plunger comprises means to prevent the passage of gas through the radial space between the hollow cylindrical body and the plunger in the first area, the plunger (5) further comprising a first hole (6) for the passage of gas between the two chambers (3, 4) and a second hole (7) comprising a first check valve (8) adapted to allow passage of gas from the second chamber (4) to the first chamber (3) and prevent it in the opposite direction, being the first hole (6) of a lower section than the second hole (7).

Thus, the gas flow is restricted only at the end of the return stroke of the rod and the input of heat energy to the gas spring decreases, thereby allowing the gas spring to work at higher frequencies or, working at the same frequency, its lifetime is prolonged over a delay in the entire return stroke of the rod. Additionally, this configuration allows a sliding of the rod until the plunger meets the cap of the open part of the body, having a total length of deceleration.

Besides, the fact that the inner diameter of the second longitudinal area of the cylinder is greater than the inner diameter of the first area and that this is achieved by emptying the cylinder in the second longitudinal area, increases the volume of gas of the gas spring and reduces the compression ratio. Thus, the gas spring reaches less maximum pressure making the service/working life longer. Even a lower rate of compression has an effect on the press spending less energy to compress the gas springs. Further advantages will be described in the prefered embodiment of the invention.

### DESCRIPTION OF THE DRAWINGS

To complement the description being made and in order to help better understand the features of the invention, according to a preferred practical embodiment thereof, a set of drawings is attached as an integral part of said description, wherein the following is shown as way of illustration but not limited to:
Figure 1. - Shows a schematic section of a gas spring belonging to the state of the art.
Figure 2. - Shows a schematic section of a gas spring not belonging to the invention, with the plunger located on the second longitudinal area.
Figure 3. - Shows a schematic section of the gas sping corresponding to Figure 2 where the plunger is located on the first longitudinal zone.
Figure 4. - Shows a schematic section of a gas spring comprising a gas spring with another type of belonging to the invention, gas passage means between both chambers, not
Figure 5. - Shows a schematic section of a gas spring comprising according to the invention.
Figure 6. - Shows a plan view and an elevation of the rod corresponding to Figure 4 or Figure 5.

### PREFERRED EMBODIMENT OF THE INVENTION

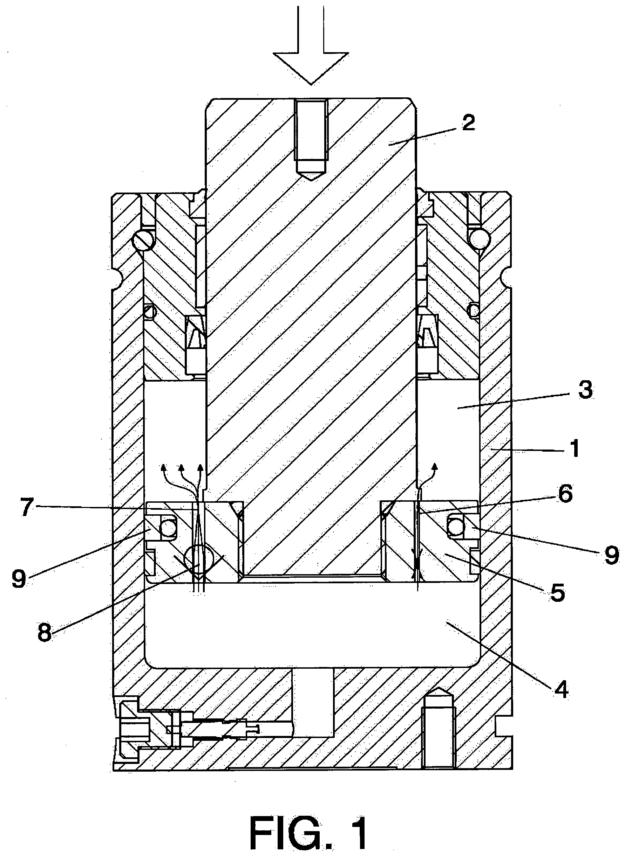

Figure 1 shows a gas spring belonging to the state of the art. The gas springs comprises a hollow cylindrical body (1) with an open end and a rod (2) of a lower section than the hollow cylindrical body (1) located in the same (1) and longitudinally slidable through its open end. It also has a plunger (5) attached to the rod (2) extending between this (2) and the inner face of the hollow cylindrical body (1).

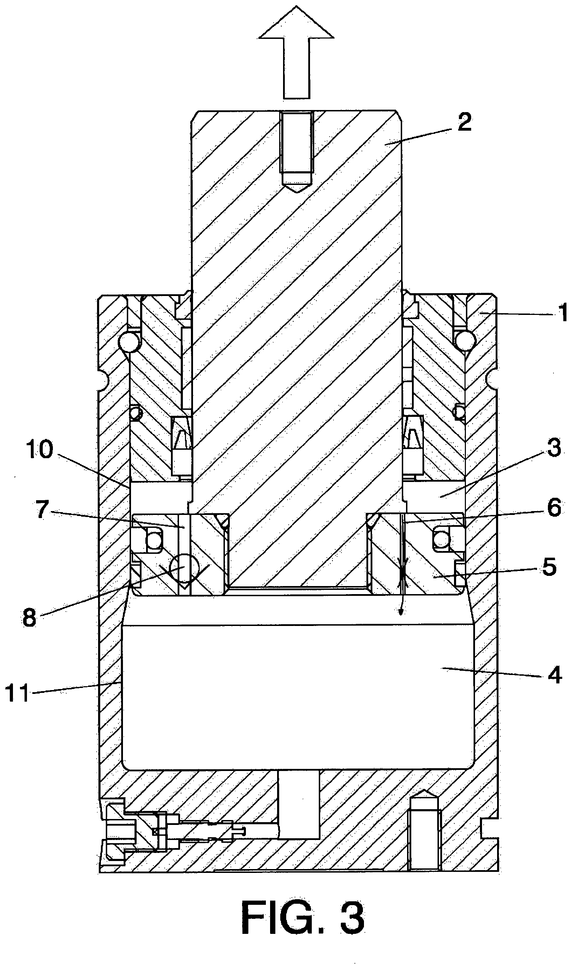

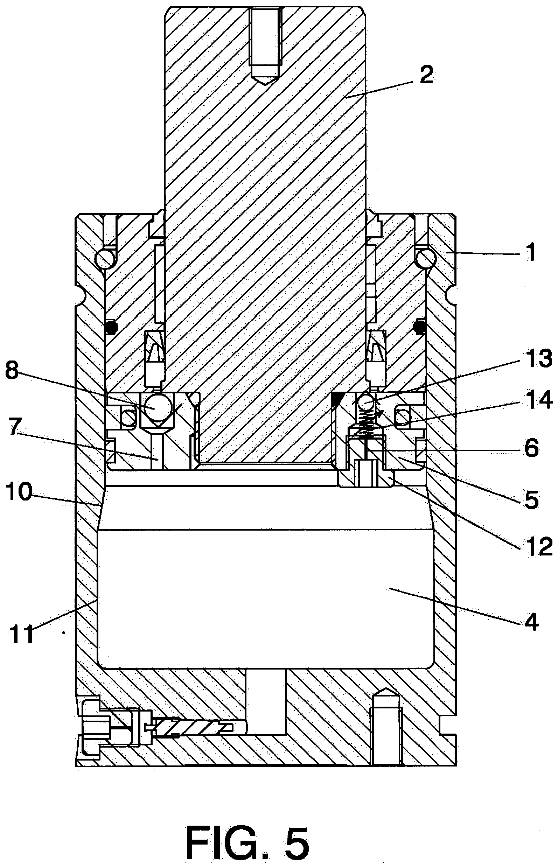

The plunger (5) defines a first gas chamber (3) located between the open end of the hollow cylindrical body (1) and the plunger (5) and a second gas chamber (4) located between the plunger (5) and the base of the hollow cylindrical body (1). The plunger (5) further comprises a first hole (6) for the passage of gas between the two chambers (3, 4) and a second hole (7) comprising first check valve (8) adapted to allow the passage of gas from the second chamber (4) to the first chamber (3) and prevent it in the opposite direction, being the first hole (6) of a lower section than the second hole (7).. In the embodiments of Figures 1 to 4, the first hole (6) allows the passage of gas in both directions, while in the embodiment of Figure 5, it is allowed only from the first chamber (3) to the second chamber (4).

Finally, between the hollow cylindrical body (1) and the plunger (5) there is a seal (9) for sealing between both elements (1, 5).

The diameter difference between the first hole (6) and the second hole (7) makes most of the gas flow to be provided by the second hole (7) and a significantly lower flow is provided through the first hole (6). Thus, when the press puts pressure on the rod (2), the first check valve or valves (8) open and the passage of gas from the second chamber (4) to the first chamber (3) occurs. When direction is reversed, that is, the press moves upward, the gas spring rod (2) rises and the first check valves (8) close and gas can only pass through the second hole (6) of the first chamber (3) to the second chamber (4). This way, the pressure of the first chamber (3) increases and compensates the stress of the second chamber (4), thereby limiting the speed of the rod (2) which rises slower than the press and they separate.

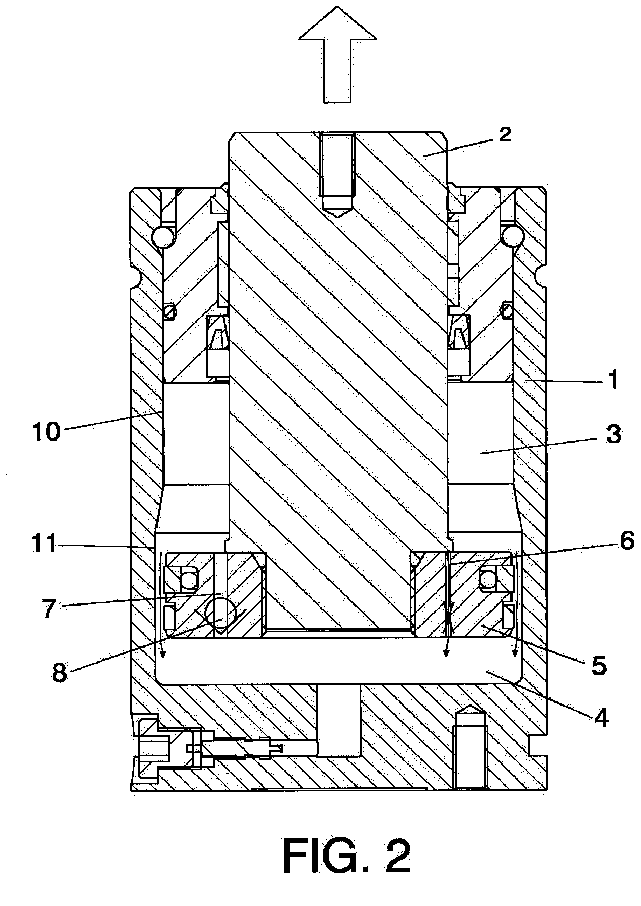

Figure 2 shows an embodiment of the rod object not bolonging to invention where the inner wall of the hollow cylindrical body (1) comprises a first inner diameter (10) of said first longitudinal area and a second inner diameter (11) of said second longitudinal area being the second inner diameter (11) greater than the first inner diameter (10) which essentially coincides with the outer diameter of the plunger (5).

Thus, when the rod (2) is extended and the press puts pressure on it (2), the plunger (5) and the hollow cylindrical body (1) make contact preventing the passage of gas through the radial space between them (1, 5) and when reaching the second area they lose contact so that the passage of gas between the wall of the hollow cylindrical body (1) and the plunger (5) is allowed, functioning as a spring without delay.

When the rod (2) is retracted and the press releases it (2), in the second longitudinal area the rod (2) follows the progress of the press as there is no constriction to the passage of gas between the two chambers (3, 4) and when the plunger (5) makes contact with the inner wall of the hollow cylindrical body (1), which occurs only at the end of its longitudinal stroke, i.e., in the first longitudinal area, its movement is slowed because the plunger (5) seals the gas against the body (1) and the first hole (6) is the only passage of gas.

Figure 5 shows a gas spring object of the invention with the gas flow means between the two chambers (3, 4). To this end, the plunger (5) comprises a second check valve (13) arranged in series with the hole (6) and connected with an elastic means (14) for its opening in order to allow the passage of gas from the first chamber (3) to the second chamber (4) and prevents it in the opposite direction. This configuration has the advantage of keeping the pressure of the upper chamber (3) above the one of the lower chamber (4), thanks to the fact that the opening of the second check valve (13) is arranged in connection with the elastic mean (14), so to produce the opening of the same (13) it requires the upper chamber (3) to exceed the force exerted by the elastic means (14).

This will decrease the strength of the gas spring in its extended position, so that at the beginning of the next work cycle, the press has to make less effort and consequently vibrations in the compression stroke of the rod (2) are reduced.

Depending on the strength of the elastic element (14) of the second check valve (13), it is possible to calibrate the pressure difference between the two chambers (3, 4) and therefore the vibrations of the gas spring can be controlled. It is possible, for example, if the elastic element (14) produces a pressure difference of 30 bar between the two chambers (3, 4) to reduce the initial force of the gas spring for the next press cycle by 25% and 35% compared to the nominal force of the spring.

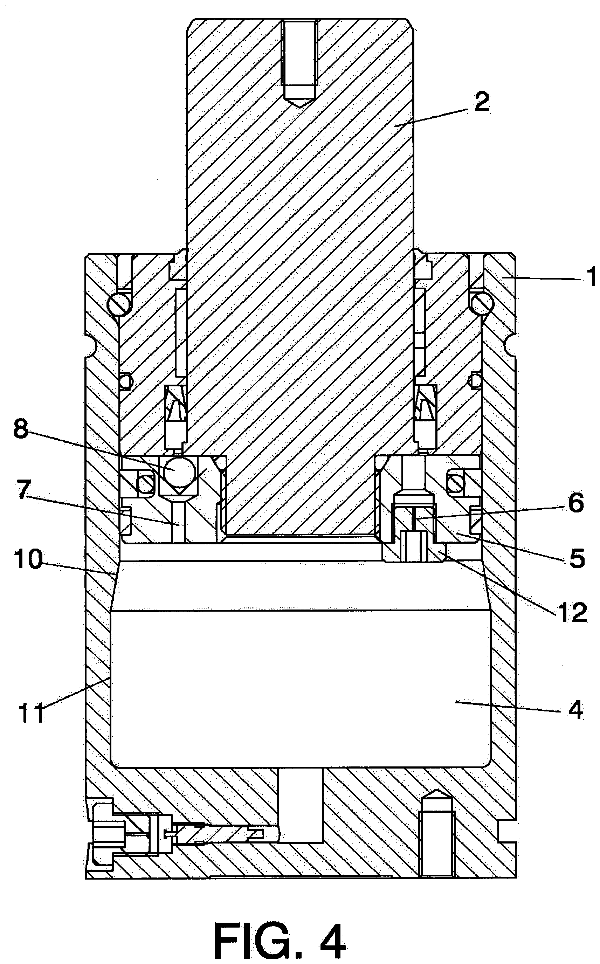

In the embodiment shown in Figure 4, in which there is no second check valve (13) in series with the first hole (6), pressure in both chambers (3, 4) is equal and when the next cycle starts, the press has an impact on the rod (2) with the nominal force of the gas spring.

The effect achieved by the second check valve (13) with elastic element (14) occurs only at the initial time of the compression stroke of the rod (2). When the rod (2) begins to compress the volume of the upper chamber (3) increases rapidly and therefore the pressure also declines rapidly, until as further compressing the pressure of the upper chamber (3), it becomes less than the one of the lower chamber (4), opening the first valves (8) and leveling the pressure.

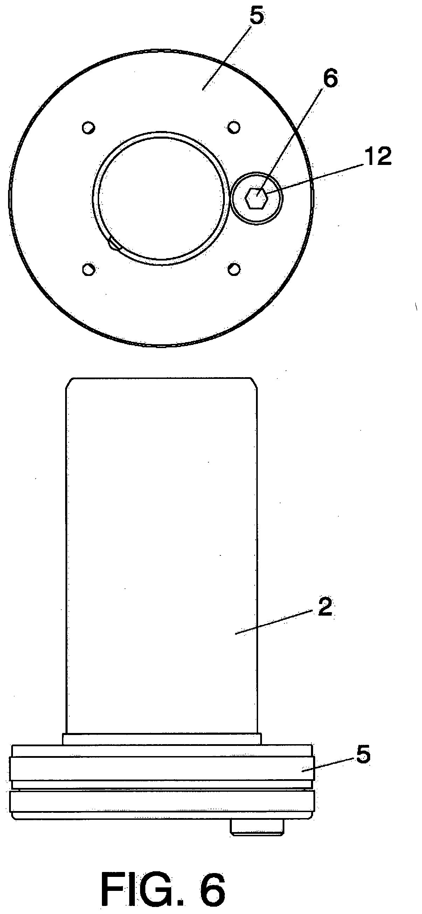

Figures 5 and 6 show a second embodiment where the plunger (5) comprises an interchangeable plug (12) which comprises the first hole (6). This makes it possible to modify the final speed of the rod (2), since it is possible to change the plug (12) for another one with a first hole (6) of different diameter to adjust the speed and optimize the performance of the die, for example to prevents vibration, causing greater braking or to get more production, causing less braking.

## Claims

1. Delay return gas spring comprising:
- a hollow cylindrical body (1) with an open end,
- a rod (2) located in the hollow cylindrical body (1) of a lesser section than this (1) and which is longitudinally slidable through its open end,
- a plunger (5) attached to the rod (2),
- a first gas chamber (3) located between the open end of the hollow cylindrical body (1) and the plunger (5),
- a second gas chamber (4) located between the plunger (5) and the base of the hollow cylindrical body (1), and
- gas passage means between the two chambers (3, 4) located in the plunger (5), configured so that they allow the passage of a first flow from the second chamber (4) to the first chamber (3) and the passage of a second flow from the first chamber (3) to the second chamber (4) lower than the first flow in order to delay the return of the rod (2);
the hollow cylindrical body (1) comprising a first longitudinal area located in the vicinity of its open end having a first inner diameter (10) and a second longitudinal area placed following the first longitudinal area having a second inner diameter (11) wherein the second inner diameter (11) is greater than the first inner diameter (10), so that a radial space is comprised between the hollow cylindrical body (1) and the plunger (5) in the second longitudinal area for the passage of gas between both chambers (3, 4);
the plunger (5) comprising means to prevent the passage of gas through the radial space between the hollow cylindrical body (1) and the plunger (5) in the first area, the plunger (5) further comprising a first hole (6) for the passage of gas between the two chambers (3, 4) and a second hole (7) comprising a first check valve (8) adapted to allow passage of gas from the second chamber (4) to the first chamber (3) and prevent it in the opposite direction, being the first hole (6) of a lower section than the second hole (7);
the delay return gas spring being **characterized in that** the plunger (5) comprises a second check valve (13) arranged in series with the hole (6) and connected with an elastic means (14) for its opening in order to allow the passage of gas from the first chamber (3) to the second chamber (4) and prevents it in the opposite direction.

2. Delay return gas spring, according to claim 1, **characterized in that** the first inner diameter (10) of said first longitudinal area essentially coincides with the outer diameter of the plunger (5).

3. Delay return gas spring, according to claim 1, **characterized in that** the plunger (5) comprises an interchangeable plug (12) that comprises the first hole (6).

## Patentansprüche

1. Gasfeder mit verzögerter Rückkehr, Folgendes umfassend:
- einen hohlen zylindrischen Körper (1) mit einem offenen Ende,
- eine Stange (2), die in dem hohlen zylindrischen Körper (1) mit einem kleineren Querschnitt als dieser (1) angeordnet ist und die durch sein offenes Ende längsseitig verschiebbar ist,
- einen Kolben (5), der an dem Stange (2) angebracht ist,
- eine erste Gaskammer (3), die zwischen dem offenen Ende des hohlen zylindrischen Körpers (1) und dem Kolben (5) angeordnet ist,
- eine zweite Gaskammer (4), die zwischen dem Kolben (5) und dem Boden des hohlen zylindrischen Körpers (1) angeordnet ist und
- Gasdurchgangsmittel zwischen den beiden Kammern (3, 4), die in dem Kolben (5) angeordnet sind, die so gestaltet sind, dass sie den Durchgang eines ersten Durchflusses von der zweiten Kammer (4) zu der ersten Kammer (3) und den Durchgang eines zweiten Durchflusses aus der ersten Kammer (3) zu der zweiten Kammer (4) ermöglichen, der niedriger als der erste Durchfluss ist, um die Rückkehr der Stange (2) zu verzögern;
wobei der hohle zylindrische Körper (1) einen ersten Längsbereich, der in der Nähe seines offenen Endes mit einem Innendurchmesser (10) angeordnet ist, und einen zweiten Längsbereich umfasst, der dem ersten Längsbereich mit einem zweiten Innendurchmesser (11) folgend angeordnet ist, wobei der zweite Innendurchmesser (11) größer als der erste Innendurchmesser (10) ist, sodass ein radialer Raum zwischen dem hohlen zylindrischen Körper (1) und dem Kolben (5) in dem zweiten Längsbereich für den Durchgang von Gas zwischen beiden Kammern (3, 4) gebildet wird;
wobei der Kolben (5), der Mittel zum Verhindern des Durchgangs von Gas durch den radialen Raum zwischen dem hohlen zylindrischen Körper (1) und dem Kolben (5) im ersten Bereich umfasst, wobei der Kolben (5) ferner eine erste Öffnung (6) für den Durchgang von Gas zwischen den beiden Kammern (3, 4) und eine zweite Öffnung (7) umfasst, die ein erstes Rückschlagventil (8) umfasst, das angepasst ist, um den Durchgang von Gas von der zweiten Kammer (4) zu der ersten Kammer (3) zu ermöglichen, und es in der entgegengesetzten Richtung verhindert, wobei die erste Öffnung (6) einen kleineren Querschnitt als die zweite Öffnung (7) besitzt;
wobei die Gasfeder mit verzögerter Rückkehr **dadurch gekennzeichnet ist, dass** der Kolben (5) ein zweites Rückschlagventil (13) umfasst, das mit der Öffnung (6) in Reihe angeordnet ist und mit einem elastischen Mittel (14) zu seiner Öffnung verbunden ist, um den Durchgang von Gas von der ersten Kammer (3) zu der zweiten Kammer (4) zu ermöglichen, und es in der entgegengesetzten Richtung verhindert.

2. Gasfeder mit verzögerter Rückkehr nach Anspruch 1, **dadurch gekennzeichnet, dass** der erste Innendurchmesser (10) des ersten Längsbereichs im Wesentlichen mit dem Außendurchmesser des Kolbens (5) übereinstimmt.

3. Gasfeder mit verzögerter Rückkehr nach Anspruch 1, **dadurch gekennzeichnet, dass** der Kolben (5) einen austauschbaren Stopfen (12) umfasst, der die erste Öffnung (6) umfasst.

## Revendications

1. Ressort à gaz à retour temporisé comprenant :
- un corps cylindrique creux (1) avec une extrémité ouverte,
- une tige (2) située dans le corps cylindrique creux (1) d'une section inférieure à celui-ci (1) et qui est longitudinalement glissante sur son extrémité ouverte,
- un piston (5) relié à la tige (2),
- une première chambre à gaz (3) située entre l'extrémité ouverte du corps cylindrique creux (1) et le piston (5),
- une deuxième chambre à gaz (4) située entre le piston (5) et la base du corps cylindrique creux (1), et
- des moyens de passage de gaz entre les deux chambres (3, 4) situés dans le piston (5), configurés de sorte qu'ils permettent le passage d'un premier flux de la deuxième chambre (4) à la première chambre (3) et le passage d'un deuxième flux de la première chambre (3) à la deuxième chambre (4) plus petit que le premier flux afin de temporiser le retour de la tige (2) ;
le corps cylindrique creux (1) comprenant une première zone longitudinale située dans le voisinage de son extrémité ouverte ayant un premier diamètre interne (10) et une deuxième zone longitudinale placée suivant la première zone longitudinale ayant un deuxième diamètre interne (11) dans lequel le deuxième diamètre interne (11) est supérieur au premier diamètre interne (10), de sorte qu'un espace radial est compris entre le corps cylindrique creux (1) et le piston (5) dans la deuxième zone longitudinale pour le passage de gaz entre les deux chambres (3, 4) ;
le piston (5) comprenant des moyens pour empêcher le passage de gaz à travers l'espace radiale entre le corps cylindrique creux (1) et le piston (5) dans la première zone, le piston (5) comprenant en outre un premier orifice (6) pour le passage de gaz entre les deux chambres (3, 4) et un deuxième orifice (7) comprenant un premier clapet anti-retour (8) pour permettre le passage de gaz de la deuxième chambre (4) à la première chambre (3) et l'empêcher dans le sens opposé, le premier orifice (6) étant une section inférieure au deuxième orifice (7) ;
le ressort à gaz à retour temporisé étant **caractérisé en ce que** le piston (5) comprend un deuxième clapet anti-retour (13) disposé en série avec l'orifice (6) et relié aux moyens élastiques (14) pour son ouverture afin de permettre le passage de gaz de la première chambre (3) à la deuxième chambre (4) et l'empêcher dans le sens opposé.

2. Ressort à gaz à retour temporisé, selon la revendication 1, **caractérisé en ce que** le premier diamètre interne (10) de ladite première zone longitudinale coïncide essentiellement avec le diamètre externe du piston (5).

3. Ressort à gaz à retour temporisé, selon la revendication 1, **caractérisé en ce que** le piston (5) comprend une prise interchangeable (12) qui comprend le premier orifice (6).
